(19) Europäisches Patentamt
European Patent Office
Office européen des brevets

(11) **EP 3 536 949 B1**

(12) **EUROPEAN PATENT SPECIFICATION**

(45) Date of publication and mention
of the grant of the patent:
**12.08.2020 Bulletin 2020/33**

(51) Int Cl.:
*F03D 7/04* (2006.01)

(21) Application number: **18176270.9**

(22) Date of filing: **06.06.2018**

(54) **WIND FARM, AND OPERATION METHOD, CONTROL DEVICE, AND OPERATION CONTROL PROGRAM FOR WIND FARM**

WINDPARK UND BETRIEBSVERFAHREN, STEUERUNGSVORRICHTUNG UND BETRIEBSSTEUERUNGSPROGRAMM FÜR EINEN WINDPARK

PARC D'ÉOLIENNES, PROCÉDÉ DE FONCTIONNEMENT, DISPOSITIF DE COMMANDE ET PROGRAMME DE COMMANDE DE FONCTIONNEMENT DESTINÉ À UN PARC D'ÉOLIENNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.03.2018 JP 2018041065**

(43) Date of publication of application:
**11.09.2019 Bulletin 2019/37**

(73) Proprietor: **Mitsubishi Heavy Industries, Ltd.**
**Tokyo 108-8215 (JP)**

(72) Inventors:
• **Ikawa, Yoshikatsu**
**Tokyo, 108-8215 (JP)**
• **Ide, Kazunari**
**Tokyo, 108-8215 (JP)**
• **Karikomi, Kai**
**Tokyo, 108-8215 (JP)**
• **Yuge, Atsushi**
**Tokyo, 108-8215 (JP)**

(74) Representative: **Henkel & Partner mbB**
**Patentanwaltskanzlei, Rechtsanwaltskanzlei**
**Maximiliansplatz 21**
**80333 München (DE)**

(56) References cited:
**EP-A1- 2 679 813     US-A1- 2012 112 460**

• **VAN DIJK MIKE T ET AL: "Wind farm multi-objective wake redirection for optimizing power production and loads", ENERGY, ELSEVIER, AMSTERDAM, NL, vol. 121, 11 January 2017 (2017-01-11), pages 561-569, XP029933683, ISSN: 0360-5442, DOI: 10.1016/J.ENERGY.2017.01.051**
• **GEBRAAD P M O ET AL: "A data-driven model for wind plant power optimization by yaw control", 2015 AMERICAN CONTROL CONFERENCE (ACC), IEEE, 4 June 2014 (2014-06-04), pages 3128-3134, XP032621887, ISSN: 0743-1619, DOI: 10.1109/ACC.2014.6859118 [retrieved on 2014-07-17]**

**Description**

TECHNICAL FIELD

The present disclosure relates to a wind farm, as well as an operation method, a control device, and an operation control program for a wind farm.

BACKGROUND ART

Typically, to optimize the output of a wind turbine, a variety of operation methods and control methods has been proposed.
For instance, Patent Document 1 discloses imparting a perturbation to a control parameter of a turbine, and evaluating the power generation amount obtained as a result.

Citation List

Patent Literature

Patent Document 1: EP2679813A
Further prior art is VAN DIJK MIKE T ET AL: "Wind farm multi-objective wake redirection for optimizing power production and loads", ENERGY, ELSEVIER, AMSTERDAM, NL, vol. 121, 11 January 2017, pages 561-569.

SUMMARY

Meanwhile, in a wind farm which generates power with a plurality of wind turbine power generating apparatuses (hereinafter, referred to as wind turbines), compared to front wind turbines disposed on the upwind side, the back wind turbines disposed on the downwind side normally have a smaller power generation output due to the influence of wake of the front wind turbines. Thus, it is critical to optimize the output of the entire wind farm, which is the sum of power generation outputs produced by the respective wind turbines. In this regard, although the technique described in Patent Document 1 discloses a control setting taking account of the individual optimization for two wind turbines, it is difficult to apply this technique entirely to a relatively large-scaled wind farm including a plurality of (three or more) wind turbines and obtain an optimum adjustment result.
In view of the above issue, an object of at least one embodiment of the present disclosure is to enable reaching a new optimum control setting in a short period of time even if the optimum control setting for each wind turbine is changed by variation of wind.
Accordingly, there is provided a method of operating a wind farm as set out in independent claim 1, a control device of a wind farm as set out in independent claim 7, a wind farm as set out in claim 8, and an operation control program of a wind farm as set out in independent claim 9. Advantageous developments are defined in the dependent claims.
(1) A method of operating a wind farm including a plurality of wind turbines, according to at least one embodiment of the present invention, includes: a step of imparting a perturbation to a control setting of each of the wind turbines to be optimized; a step of, after imparting the perturbation, obtaining an evaluation value including at least a total output of the wind turbines to be optimized; and a step of updating the control setting for each of the wind turbines to be optimized on the basis of a gradient of the evaluation value. The step of obtaining an evaluation value includes, for each of the wind turbines to be optimized, employing, as effective data, the evaluation value obtained from the wind turbine satisfying a first condition which is required to be met by the wind turbines to be optimized at least in relation to wind direction.
With the above method (1), the control setting is updated using as the effective data an evaluation value obtained from the wind turbine satisfying the first condition which should be satisfied by the wind turbines to be optimized at least in relation to wind direction. That is, for instance, filtering related to wind direction is performed, and it is possible to optimize the entire wind farm on the basis of a highly reliable evaluation value obtained from the wind turbine satisfying the first condition that, for instance, wind direction is within a predetermined range. As a result, it is possible to improve convergence of optimization.
(2) In some embodiments, in the above method (1), the step of obtaining the evaluation value may include employing, as the effective data, the evaluation value obtained only from the wind turbine satisfying the first condition in relation to the wind direction and a second condition which is required to be met by the wind turbines to be optimized in relation to wind velocity, from among the wind turbines to be optimized.
According to the above method (2), the employed effective data is only an evaluation value obtained from the wind turbine satisfying the first condition in relation to wind direction and the second condition in relation to wind velocity.

That is, filtering is performed related to wind velocity in addition to wind direction, and it is possible to perform optimization on the basis of an evaluation value with an even higher reliability.

(3) In some embodiments, in the above method (1) or (2), the step of imparting a perturbation may include imparting a perturbation of '+Δ' at different points of time to the control setting of each of the wind turbines to be optimized, and the step of obtaining the evaluation value includes determining whether the number of the effective data is not smaller than a first threshold, or whether a change of the evaluation value is not greater than a second threshold, and, if the number of the effective data is not smaller than the first threshold, or the change of the evaluation value is not greater than the second threshold, proceeding to a process of imparting a perturbation of '-Δ' to the control setting of each of the wind turbine to be optimized at different points of time.

If at least a predetermined number (first threshold) of highly reliable evaluation values are obtained, or if a change in the evaluation values obtained at different points of time is not greater than a predetermined threshold (second threshold), convergence of optimization is further improved through update of the control setting based on the gradient of these evaluation values. As described above, according to the above method (3), it is possible to improve convergence before optimization of the total output of the entire wind farm 1 considerably.

(4) In some embodiments, in any one of the above methods (1) to (3), the step of obtaining the evaluation value may include obtaining an average value of a plurality of the effective data to be used as the evaluation value.

According to the above method (4), it is possible to reduce the influence of variation in wind condition such as wind direction and wind velocity by using a plurality of effective data, and thereby to optimize the total output of the entire wind farm on the basis of a highly reliable evaluation value. As a result, it is possible to improve the convergence of optimization.

(5) In some embodiments, in any one of the above methods (1) to (4), the step of obtaining the evaluation value may include obtaining the evaluation value on the basis of an approximate curve model of a plurality of the effective data.

According to the above method (5), it is possible to reduce the influence of variation in wind condition such as wind direction and wind velocity by using an approximate curve of a plurality of effective data, and thereby to optimize the total output of the entire wind farm on the basis of a highly reliable evaluation value. As a result, it is possible to improve the convergence of optimization.

(6) In some embodiments, in any one of the above methods (1) to (5), the step of obtaining the evaluation value may include setting one of the plurality of wind turbines which satisfies the first condition at least in relation to wind direction as a reference wind turbine, and obtaining, as the evaluation value, a difference between an output of the reference wind turbine and an output of each of the wind turbines to be optimized.

According to the method (6), a difference of output is obtained between one of the plurality of wind turbines to be optimized satisfying the first condition in relation to at least wind direction, being a reference wind turbine, and other wind turbines to be optimized. That is, by imparting a perturbation only to the wind turbines to be optimized, and obtaining a difference between the reference wind turbine and other wind turbines, the influence of wind condition is excluded, and it is possible to treat an evaluation value under the same wind condition. Thus, it is possible optimize the total output of the entire wind farm on the basis of a highly reliable evaluation value.

(7) In some embodiments, in any one of the above methods (1) to (6), provided that the wind turbines satisfying the first condition at least in relation to wind direction includes a first group and a second group each including the plurality of wind turbines, the step of imparting a perturbation may include simultaneously imparting a perturbation of '+Δ' to each wind turbine of the first group and perturbation of '-Δ' to each wind turbine of the second group.

According to the above method (7), different perturbations are imparted simultaneously to the first group and the second group of the plurality of wind turbines satisfying the first condition at least in relation to wind direction, and thus it is possible to perform the optimization process under the same wind condition, which makes it possible to optimize the total output of the entire wind farm on the basis of a highly reliable evaluation value.

(8) A control device of a wind farm including a plurality of wind turbines, according to at least one embodiment of the present disclosure, includes: a perturbation imparting part for imparting a perturbation to a control setting of each of the wind turbines to be optimized; an evaluation-value calculation part for, after imparting the perturbation, obtaining an evaluation value including at least a total output of the wind turbines to be optimized; and an update part for updating the control setting for each of the wind turbines to be optimized on the basis of a gradient of the evaluation value. The evaluation-value calculation part is configured to obtain the evaluation value, for each of the wind turbines to be optimized, on the basis of effective data obtained from the wind turbine satisfying a first condition which is required to be met by the wind turbines to be optimized at least in relation to wind direction.

With the above configuration (8), as described in the above (1), the control setting is updated by using, as the effective data, an evaluation value obtained from the wind turbine satisfying the first condition which should be satisfied by the wind turbines to be optimized at least in relation to wind direction. That is, for instance, filtering related to wind direction is performed, and it is possible to optimize the entire wind farm on the basis of a highly reliable evaluation value obtained from the wind turbine satisfying the first condition that wind direction is within a predetermined range, for instance. As a result, it is possible to improve the convergence of optimization.

(9) A wind farm according to at least one embodiment of the present invention includes: a plurality of wind turbines; and the control device according to the above (8), configured to perform an operation control of the plurality of wind turbines.

With the above configuration (9), it is possible to obtain a wind farm capable of performing filtering related to wind direction, and optimizing the total output of the entire wind farm on the basis of a highly reliable evaluation value obtained from the wind turbine satisfying the first condition that wind direction is within a predetermined range, for instance.

(10) An operation control program of a wind farm including a plurality of wind turbines, according to at least one embodiment of the present invention, is configured to make a computer perform: a step of imparting a perturbation to a control setting of each of the wind turbines to be optimized; a step of, after imparting the perturbation, obtaining an evaluation value including at least a total output of the wind turbines to be optimized; and a step of updating the control setting for each of the wind turbines to be optimized on the basis of a gradient of the evaluation value. When the computer is caused to perform the step of obtaining an evaluation value, the computer obtains the evaluation value on the basis of effective data obtained from the wind turbine satisfying a first condition which is required to be met by the wind turbines to be optimized at least in relation to wind direction, from among the wind turbines to be optimized.

With the above configuration (10), it is possible to optimize the entire wind farm on the basis of a highly reliable evaluation value obtained from the wind turbine satisfying the first condition that wind direction is within a predetermined range, for instance.

According to at least one embodiment of the present disclosure, it is possible to enable reaching a new optimum control setting in a short period of time even if the optimum control setting for each wind turbine is changed by variation of wind.

BRIEF DESCRIPTION OF DRAWINGS

FIG. 1 is a schematic diagram of a configuration example of a wind farm according to an embodiment.

FIG. 2 is a schematic diagram of a configuration example of a wind turbine according to an embodiment.

FIG. 3 is a block diagram of a configuration example of a control system of a control device of a wind farm according to an embodiment.

FIGs. 4A and 4B are schematic diagrams showing an example of a control method for a wind farm. FIG. 4A is an example of a low resolution mode and FIG. 4B is an example of a high resolution mode.

FIG. 5 is a schematic diagram showing a processing concept of simultaneous perturbation stochastic approximation (SPSA), which is a basic control method according to an embodiment.

FIG. 6 is a diagram showing a control setting, an evaluation value, and an updating algorithm according to an embodiment.

FIG. 7 is a schematic diagram for describing improvement of total power generation output by a control method for a wind farm according to an embodiment.

FIG. 8 is a flow chart showing a process by a control device of a wind farm according to an embodiment.

FIGs. 9A and 9B are schematic diagrams showing a process example by a control device of a wind farm according to an embodiment. FIG. 9A shows a case in which filtering is based on wind direction, and FIG. 9B shows a case in which filtering is based on wind direction and wind velocity.

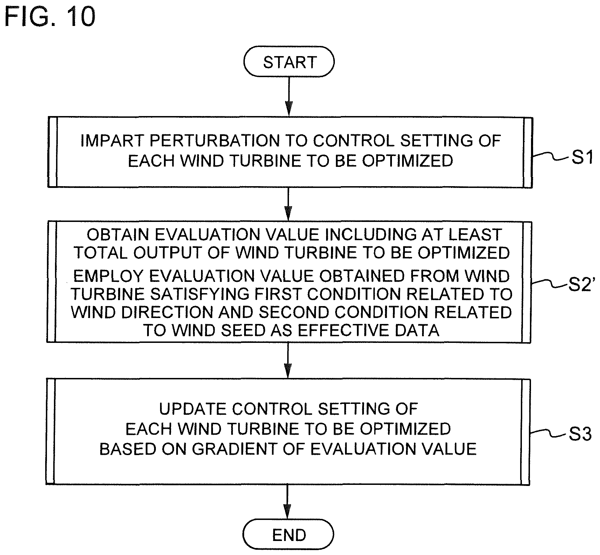

FIG. 10 is a flow chart showing a process by a control device of a wind farm according to another embodiment.

FIG. 11 is a flow chart showing a process by a control device of a wind farm according to another embodiment.

FIG. 12 is a schematic diagram of an output optimization process (averaging process) by a control method for a wind farm according to another embodiment.

FIG. 13 is a schematic diagram of an output optimization process (approximating process) by a control method for a wind farm according to another embodiment.

FIG. 14 is a schematic diagram of an output optimization process (difference process) by a control method for a wind farm according to another embodiment.

FIG. 15 is a schematic diagram of an output optimization process by a control method for a wind farm according to an embodiment.

DETAILED DESCRIPTION

Embodiments of the present invention will now be described with reference to the accompanying drawings. It is intended, however, that unless particularly specified, dimensions, materials, shapes, relative positions and the like of components described in the embodiments shall be interpreted as illustrative only and not intended to limit the scope of the present invention unless particularly specified.

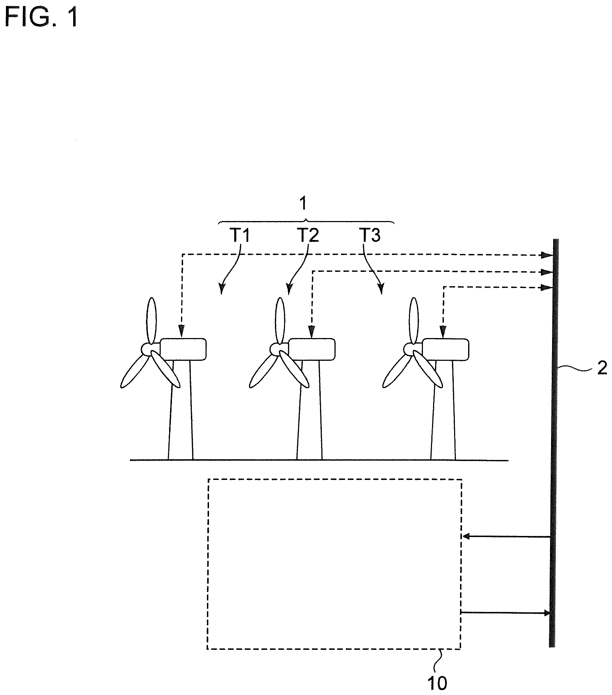

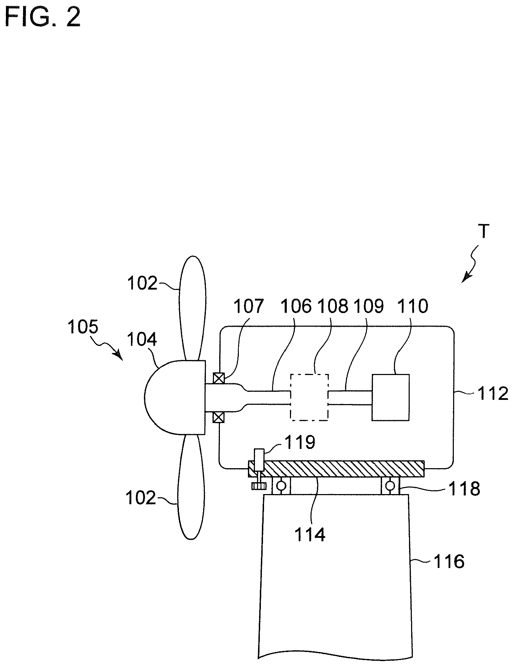

FIG. 1 is a diagram of a configuration example of a wind farm. FIG. 2 is a diagram of an example of a wind turbine constituting a wind farm according to an embodiment.

As shown in FIG. 1, a wind farm 1 according to some embodiments includes a plurality of wind turbines T and a wind farm controller 10 (control device of wind farm). The wind farm controller 10 manages the operation control of the wind farm 1 including a plurality of wind turbines T1 to Tn. Hereinafter, an example of wind turbines T1 to T3 constituting the wind farm 1 will be described, and then the wind farm controller 10 will be described in detail. While three wind turbines T1 to T3 are shown as a plurality of wind turbines in FIG. 1, the number of wind turbines constituting the wind farm 1 is not limited to this, and may be any number (e.g. n or N).

In some embodiments, as shown in FIG. 2, each of the wind turbines T1 to T3 of the wind farm 1 may include, a rotor 105 including a plurality of blades 102 and a hub 104 to which the blades 102 are mounted, a main shaft 106 coupled to the hub 104, and a generator 110 driven in response to the rotational force of the main shaft 106. In some embodiments, the main shaft 106 and the generator 110 may be coupled via a drive train 108 and an output shaft 109 thereof. In some embodiments, the drive train 108 may include a gear type speed increasing unit which increases the rotation speed of the main shaft 106. In some embodiments, the drive train 108 may include a hydraulic transmission instead of a gear type speed increasing unit. In another embodiment, instead of the drive train 108, a direct drive method may be employed, in which the main shaft 106 and the generator 110 are directly connected.

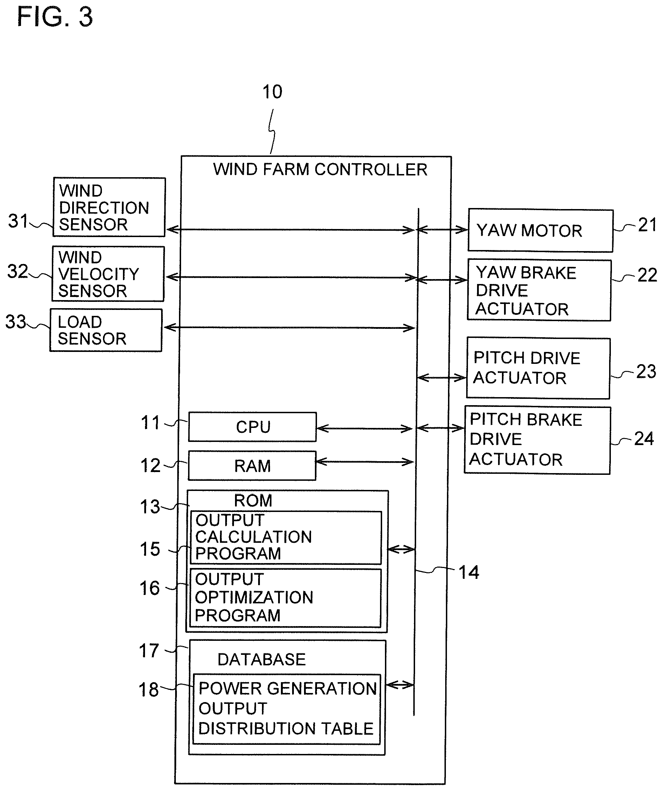

The drive train 108 and the generator 110 may be housed inside a nacelle 112 rotatably supporting the main shaft 106 via a main shaft bearing 107. A nacelle base plate 114 forms the bottom side of the nacelle 112, and may be supported by a tower 116 via a yaw rotational bearing 118. A yaw rotational mechanism 119 including a yaw motor 21 (see FIG. 3) and a pinion gear may be fixed to the nacelle base plate 114. The nacelle 112 may be rotatable relative to the tower 116 by driving the yaw motor 21 in a state where the pinion gear of the yaw rotational mechanism 119 is engaged with the ring gear disposed on the side of the tower 116. Furthermore, each blade 102 is supported on the hub 104 via a blade rotational bearing (not shown), and the pitch angle may be adjustable by a pitch drive actuator 23 (see FIG. 3) disposed inside the hub 104.

Furthermore, in the wind turbine T having the configuration example shown in FIG. 2, state values representing the damaged state or deteriorated state of various components are obtained by a state-value detection sensor (for instance, including load sensor 33 or the like shown in FIG. 3), and reported to the wind farm controller 10.

Specifically, for example, state values of various components of each of the wind turbines T1 to T3 may include: the weight of a blade 102, weight unbalance between blades 102, vibration of the blades 102, and the like, which indicate the damaged state or deteriorated state of the blades 102; the fatigue load of the root portion or the upper portion of the tower 116, the vibration of the tower 116, and the like, which indicate the damaged state or deteriorated state of the tower 116; the vibration of the main shaft bearing 107 or vibration of the bearing of a hydraulic pump, vibration or whirling of the main shaft 106, piston vibration or amplitude of the hydraulic pump, efficiency of the hydraulic transmission and the like, which indicates the damaged state or deteriorated state of the drive train 108 such as a speed increasing unit and a hydraulic transmission; and fatigue due to stress concentration, which indicate the damaged state or deteriorated state of a member formed by casting, such as the nacelle base plate 114 and the hub 104.

Next, the detail of the wind farm controller 10 will be described.

FIG. 3 is a block diagram of a configuration of a control system of the wind farm controller 10 (control device of a wind farm) according to some embodiments.

As shown in FIG. 3, in some embodiments, the wind farm controller 10 is a computer, for instance, and may include a CPU 11, an ROM (read only memory) 13 as a memory part for storing data such as various programs and tables executed by the CPU 11, an RAM (random access memory) 12 which functions as a work region such as an expansion region and a calculation region for executing various programs, and further, a hard disk drive (HDD) 15 as a mass storage (not shown), a communication interface for connecting to a communication network, and an access part (not shown) to which an external storage device is mounted. In some embodiments, the wind farm controller 10 may include a database 17 which stores the optimum control setting obtained in the step of updating a control setting described below, in relation to a wind condition parameter, and the database 17 may store a power generation output distribution table 18 or the like described below. The above components are all connected via a bus 14, and the bus 14 is connected electrically to each of the wind turbines T1 to T3 of the wind farm 1 via a signal line 2 (see FIG. 1). Furthermore, the wind farm controller 10 may be connected to an input part (not shown) including a key board and a mouse, and a display part (not shown) including a liquid crystal display device for displaying data, for instance.

In some embodiments, the wind farm controller 10 may receive detection signals related to wind direction, wind velocity, and load, from each of a wind direction sensor 31, a wind velocity sensor 32, and a load sensor 33 provided for each of the wind turbines T1 to T3. One or more of the above load sensor 33 may be disposed in a location where an apparatus load or a wind load is applied, such as the main shaft bearing 107 and the tower 116. In some embodiments, the wind farm controller 10 may be electrically connected to a yaw motor 21, a yaw brake drive actuator 22, a pitch drive actuator 23, and a pitch brake drive actuator 24, via the bus 14 and the signal line 2.

In some embodiments, the ROM 13 may store an output calculation program 15 which calculates the total output of the wind farm 1 from the power generation amounts of the respective wind turbines T1 to T3, and an output optimization program 16 (operation control program) for optimizing the total output of the wind farm 1. These programs will be described below.

Herein, the output optimization process for the wind farm 1 according to some embodiments will be described in detail.

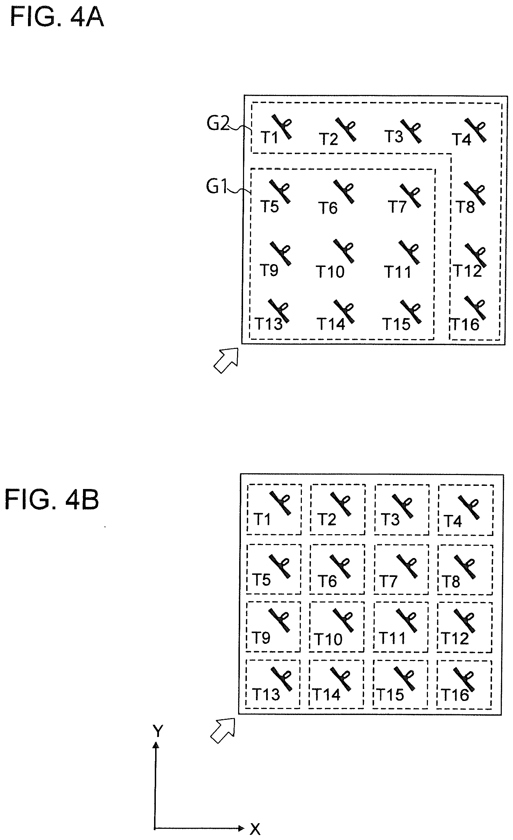

FIGs. 4A and 4B are schematic diagrams showing a control method for the wind farm 1 according to some embodiments. FIG. 4A is an example of a low resolution mode and FIG. 4B is an example of a high resolution mode. In the low resolution mode, all wind turbines (e.g. N wind turbines) belonging to a wind farm to be controlled is divided into some groups less than the total number of the wind turbines (e.g. M groups, where N>M), and wind turbines in the same group are controlled by using the same parameter setting value. In contrast, in the high resolution mode, all wind turbines included in the wind farm 1 are each regarded as an independent target of control, and controlled by using parameter setting values independent from one another.

As shown in FIGs. 4A and 4B, the wind farm 1 may include sixteen wind turbines T1 to T16 arranged in four columns in the vertical direction of the drawing (Y direction) and four rows in the lateral direction of the drawing (X direction) orthogonal to the Y direction. These wind turbines T1 to T16 may be arranged at regular intervals in the X direction and the Y direction. The distance between the wind turbines T may be expressed as a multiple of D, provided that D is the diameter of the rotor 105. For the sake of convenience, in the description, the sixteen wind turbines in FIG. 4A and FIG. 4B are associated with numbers T1 to T16, from left top toward the right, in this order.

Assume that wind blows from the left bottom toward the right top of the drawing (for instance, wind direction vector $(x, y) = (1, 1)$).

In this case, compared to front wind turbines T disposed on the upwind side, i.e., the upstream side with respect to the wind direction (e.g. the three columns and three rows of wind turbines T5 to T7, T9 to T11, and T13 to T15 from the left bottom indicated by dotted lines in FIG. 4A are referred to as group G1), rear wind turbines T disposed on the downwind side, i.e., the downstream side with respect to the wind direction (e.g. wind turbines T1 to T4, T8, T12, and T16 of the top column and the most right row indicated by dotted line in FIG. 4A are referred to as group G2) each normally have a small power generation output, due to the influence of wake of the front wind turbines T. Thus, in the low resolution mode shown in FIG. 4A, the same control parameter (e.g. $\theta k1$) may be used in the same group G1 on the upwind side to control each wind turbine T in the group G1, while using the same control parameter (e.g. $\theta k2$) in the same group G2 on the downwind side to control each wind turbine T in the group G2.

The groups are not limited to the above described groups G1, G2, and may be formed in a variety of patterns. For instance, in FIG. 4A, with respect to wind from left, the group including at least the wind turbines T1, T5, T9, and T13 of the most left row may be regarded as an upstream side group G1, and the group including at least the wind turbines T4, T8, T12, and T16 of the most right row may be regarded as the downstream side group G2. Furthermore, the groups may be formed in another pattern.

In contrast, in the high resolution mode shown in FIG. 4B, each of the wind turbines T (T1 to T16) is a control target, and each of the wind turbines T1 to T16 may be controlled by using control parameters independent from one another.

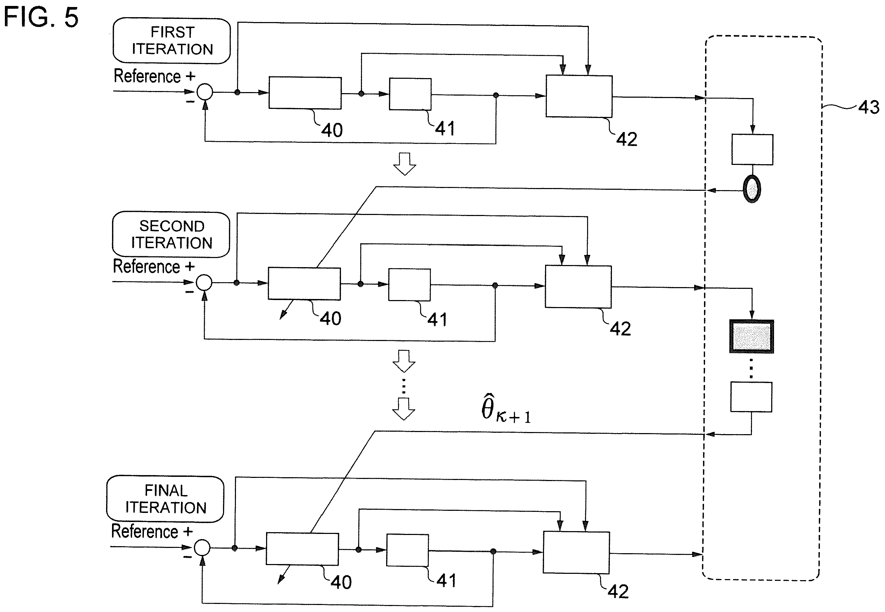

Next, with reference to FIG. 5, a control method for a wind farm according to some embodiments will be described.

FIG. 5 is a schematic diagram showing a processing concept of simultaneous perturbation stochastic approximation (SPSA), which is a basic control method in some embodiments.

In some embodiments, the plant 41 shown in FIG. 5 may be, for instance, the wind farm 1 including a plurality of wind turbines T1 to Tn.

Normally, a wind turbine power generation plant such as the wind farm 1 is a power generation plant utilizing a renewable energy, where wind condition such as wind direction, wind velocity, temperature, humidity, air density and the like change from hour to hour, and thus it is difficult to identify a control target clearly.

Thus, in some embodiments, for instance, as shown in FIG. 5, a feedback control is performed, where, provided that the plant 41 is a control target whose transfer function is unknown, an input value (measured input) from the controller 40 with respect to the plant 41, and an output value (measured output) from the plant 41 upon input of the measured input are measured, and the next measured input is determined on the basis of whether the measured output gets closer to the control target 42 (control objective). Further, the measured output from the plant 41 is compared to the reference input to the controller 40, and the difference therebetween (measured error) is input to the controller 40 and the control target 42.

Further, the control result (control performance) in each loop (hereinafter, referred to as iteration) of a repeated loop control is input to the optimization tool 43 from the control target 42. In response to input of the control performance from the first iteration, the optimization tool 43 imparts a perturbation to a plurality of control parameters related to a measured input for the plant 41 in the second iteration. Perturbation of '$+\Delta_k$' or '$-\Delta_k$', which is a random variable, is imparted to the first control setting (e.g. $\theta k$). In some embodiments, a perturbation may be imparted simultaneously to all of the wind turbines to be optimized. Accordingly, a perturbation is imparted to all of the wind turbines T to be optimized at the same time, and thus the entire wind farm 1 can achieve the optimum control setting in a shorter period of time, which makes it possible to improve the total power generation output of the entire wind farm 1 in a short period of time.

Next, from the above perturbation and the control performance of the second iteration to which the perturbation is imparted, a gradient of an evaluation value (evaluation function L) is obtained by the optimization tool 43, and the next control parameter is determined to be sent to the controller 40 as a tuning command for the controller 40 in the next iteration. By repeating the above, the optimized solution, that is, the optimized control setting, is sought for.

On the basis of the above, for instance, a process in the low resolution mode will be described, where the wind turbines T1 to T16 to be controlled are divided into the upwind group G1 and the downwind group G2.

In some embodiments, the random variable in the low resolution mode is $\Delta_{k1}$, and the random variable in the high resolution mode is $\Delta_{k2}$. In some embodiments, $\Delta_{k2}$ is a random variable having independent elements. On the other hand, elements of $\Delta_{k1}$ in the low resolution mode is only the following two: $\Delta_{k11}$ and $\Delta_{k12}$. This is because, the wind turbines T in each group (shown by dotted line in FIG. 4A) are controlled using the same control setting. The perturbations $\Delta_{k1}$ in the respective wind turbines T1 to T16 in FIG. 4A are shown in the following expression (1), in this order. (Expression 1)

$$\Delta_{k1} = [\Delta_{k11}, \Delta_{k11}, \Delta_{k11}, \Delta_{k11}, \Delta_{k12}, \Delta_{k12}, \Delta_{k12}, \Delta_{k11}, \Delta_{k12}, \Delta_{k12}, \Delta_{k12}, \Delta_{k11}, \Delta_{k12}, \Delta_{k12}, \Delta_{k12}, \Delta_{k11}]^T \cdots (1)$$

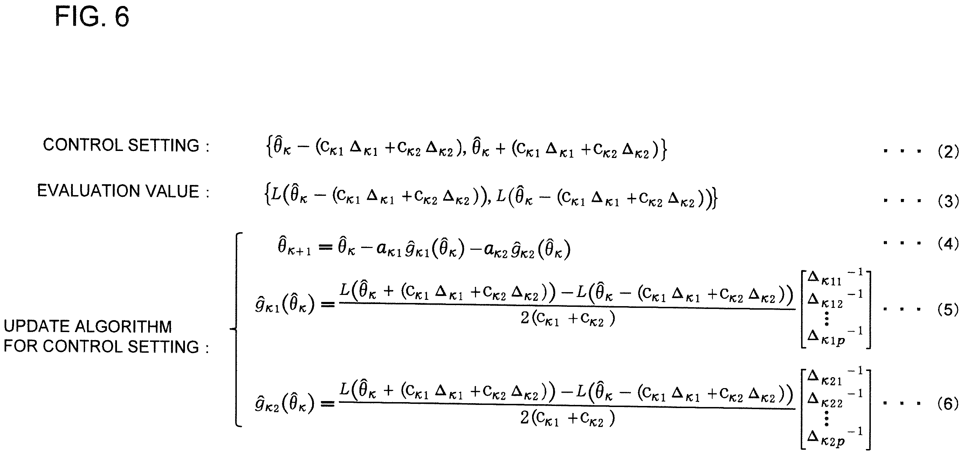

At this time, as shown in FIG. 6, for instance, the control setting may be expressed by the expression (2), the evaluation value L may be expressed by the expression (3), and the update algorithm of the control setting may be expressed by the expressions (4) to (6).

Herein, $a_{k1}$, $a_{k2}$, $c_{k1}$, $c_{k2}$ are each a gain, and $\Delta_{k1}$, $\Delta_{k2}$ are each a perturbation including a non-dimensional random variable.

That is, in some embodiments, unlike the typical MR-SPSA using $\Delta_{k1}$ or $\Delta_{k2}$ instead of $\Delta_k$ in SPSA, the optimization control is performed by using $\Delta_{k1}$ and $\Delta_{k2}$ instead of $\Delta_k$ in SPSA.

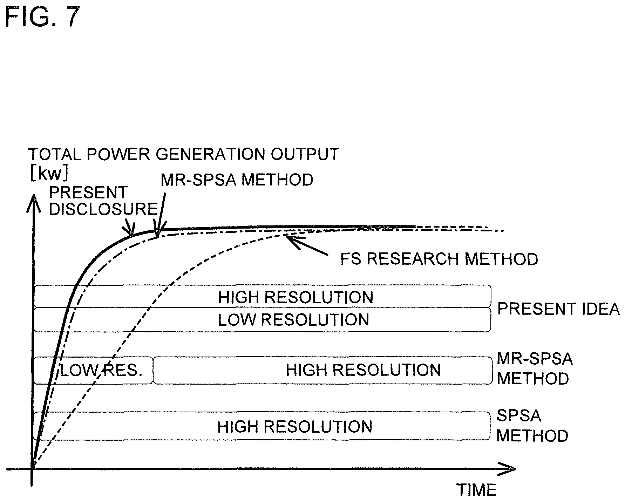

In some embodiments, with the above optimization control, the time before optimization is even further reduced compared to the typical SPSA and MR-SPSA, for the entire output of the wind farm 1, as shown by a solid line in FIG. 7. This is because, in the above described embodiments, the low resolution mode and the high resolution mode are both always used in operation, and thus it is not necessary to consider the timing for switching the operation mode between the low resolution mode and the high resolution mode, which makes it possible to perform a control where optimum perturbation is always imparted with respect to variation in wind.

In the high resolution mode in a case where wind varies little and a steady state is maintained for a long period of time, it is desirable to repeat the control loop under a certain wind condition, allowing convergence until the optimum control setting is achieved. However, in the actual wind farm 1, wind varies hour to hour, and thus convergence to the optimum control setting is not always necessary in the high resolution mode. On the contrary, by operating under a setting condition as close as possible to the optimum control setting while always following wind that changes hour to hour, it is possible to optimize the total power generation output of the wind farm 1 as a whole.

Next, with the above configuration, a method of operating the wind farm 1 implemented in some embodiments, that is, the output optimization control (output optimization process) realized by the wind farm controller 10 executing the output optimization program 16 will be described. In the following description, the process performed in response to execution of the output optimization program 16 by the wind farm controller 10 is the method for operating the wind farm 1.

The method of operating the wind farm 1 according to at least one embodiment of the present disclosure is a method of operating the wind farm 1 including a plurality of wind turbines T, and includes a step S1 of imparting a perturbation to the control setting of each of the wind turbines T to be optimized, a step S2 of obtaining an evaluation value which includes the total output of the wind turbines T to be optimized, and a step S3 of updating the control setting for each of the wind turbines T to be optimized on the basis of the gradient of the evaluation value.

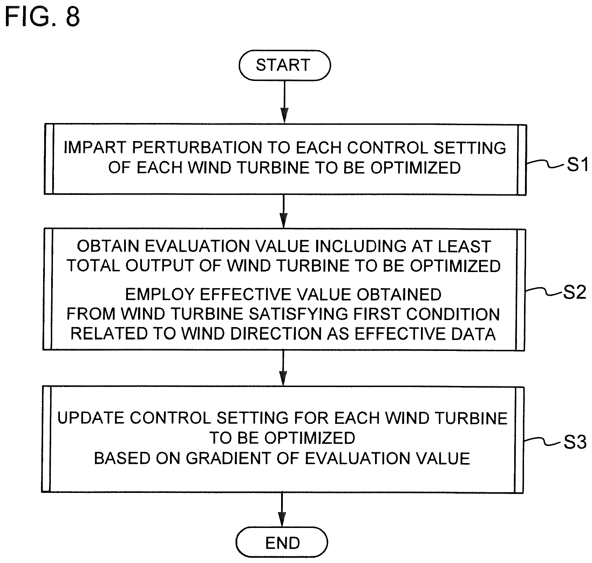

Specifically, the wind firm controller 10 of the wind farm 1 including a plurality of wind turbines T reads out the output optimization program 16 stored in the ROM 13 and expands the same in the RAM 12, and executes the same, thereby performing a process to impart a perturbation $\Delta_k$ to the control setting $\theta_k$ of each of the wind turbines T to be optimized, as shown in FIG. 8 (step S1). The output optimization program 16 makes the wind farm controller 10 perform the above process, and thereby functions as a perturbation imparting part for imparting a perturbation to the control setting of each of the wind turbines T to be optimized. Next, after imparting the above perturbation $\Delta_k$, the wind farm controller 10 performs a process of obtaining the evaluation value L including at least the total output of the wind turbines T to be optimized (step S2). The output optimization program 16 makes the wind farm controller 10 perform the above process, and thereby functions as, after imparting a perturbation, an evaluation-value calculation part for obtaining an evaluation value L including at least the total output of the wind turbines T to be optimized. Further, the wind farm controller 10 may perform a process of updating the control setting $\theta_k$ for each of the wind turbines T to be optimized

on the basis of the gradient of the evaluation value L (step S3). Accordingly, the control setting $\theta_k$ is updated and becomes $\theta_{k+1}$. The output optimization program 16 makes the wind farm controller 10 perform the above process, and thereby functions as an update part for updating the control setting $\theta_k$ for each of the wind turbines T to be optimized, on the basis of the gradient of the evaluation value L.

In step S2 of obtaining the evaluation value, for each of the wind turbines T to be optimized, an evaluation value obtained from the wind turbine T satisfying the first condition which should be satisfied by the wind turbines T to be optimized at least in relation to wind direction is employed as effective data (see FIG. 8).

Specifically, the wind farm controller 10 executing the output optimization program 16, after imparting the perturbation $\Delta_k$ to the control setting $\theta_k$ of each of the wind turbines T to be optimized, performs filtering on the basis of information related to at least wind direction, of the information obtained from each wind turbine T, and employs as effective data an evaluation value obtained from the wind turbines T passing the filter. In this step S2, a process of obtaining an evaluation value and obtaining a gradient of the evaluation value are performed.

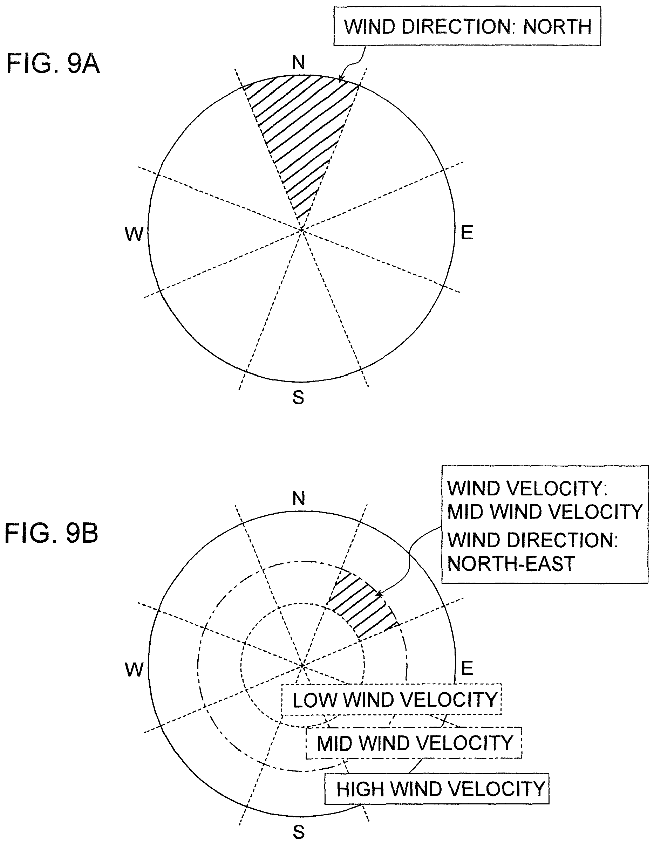

As the first condition, for instance, an evaluation value obtained from the wind turbine T whose wind direction is in a particular direction may be employed as effective data. For instance, FIG. 9A shows a non-limited example of employing, as effective data, an evaluation value of a wind turbine T whose wind direction is north. In FIG. 9A, the direction is divided into eight: north, northwest, east, southeast, south, southwest, west, and northwest. However, how to divide the direction is not limited. The direction may be divided into two opposite directions (e.g. east and west, or south and north), or four directions (e.g. north, east, south, west), or sixteen directions (north north-east, east north-east, and so on). Furthermore, the direction does not necessarily need to be divided evenly. An angular range may be set, and an evaluation value from the wind turbine T whose wind direction is within the angular range may be employed as effective data. When performing filtering by wind direction, only the evaluation value obtained from the wind turbine T satisfying the first condition may be employed as effective data, while not employing the evaluation value from the wind turbine T having other wind directions.

One of the wind turbines T to be optimized may be selected (reference or representative), and if the wind direction of the one wind turbine T is within the range of filtering (satisfying the first condition), the effective data obtained from the wind turbine T may be employed as effective data. Further, filtering may be performed by using the average value of wind directions of the wind turbines T.

According to the above method using the first condition, the control setting is updated by using effective data which is an evaluation value obtained from the wind turbine T satisfying the first condition which should be satisfied by the wind turbines T to be optimized at least in relation to wind direction. That is, for instance, filtering related to wind direction is performed, and it is possible to optimize the entire wind farm 1 on the basis of a highly reliable evaluation value obtained from the wind turbine T satisfying the first condition that wind direction is within a predetermined range, for instance. As a result, it is possible to improve the convergence of optimization.

In some embodiments, in the above embodiment, step S2 of obtaining the evaluation value may include, for each of the wind turbines T to be optimized, employing, as effective data, an evaluation value obtained from the wind turbine T satisfying the first condition in relation to wind direction and satisfying the second condition which should be satisfied by the wind turbines T to be optimized at least in relation to wind velocity.

Specifically, the wind farm controller 10 executing the output optimization program 16, after imparting the perturbation $\Delta_k$ to the control setting $\theta_k$ of each of the wind turbines T to be optimized, performs filtering on the basis of information related to at least wind direction and wind velocity, of the information obtained from each wind turbine T, and employs an evaluation value obtained from the wind turbine T passing the filter as effective data.

As the second condition, for instance, an evaluation value obtained from the wind turbine T whose wind velocity is within a particular range may be employed as effective data. For instance, FIG. 9B shows a non-limited example of employing an evaluation value of the wind turbine T whose wind direction is northeast under the first condition and whose wind velocity is mid wind velocity under the second condition, as effective data. As described above, the wind direction is not limited to the example shown in the drawing. Furthermore, the wind velocity is also not limited to the low wind velocity, mid wind velocity, and high wind velocity shown in the drawing, and a wind velocity range may be set without limitation. Furthermore, the range of wind direction, wind velocity, and a combination thereof can also be set without limitation.

According to the above method using the first condition and the second condition, the employed effective data is only an evaluation value obtained from the wind turbine T satisfying the first condition and in relation to wind direction and the second condition in relation to wind velocity. That is, filtering related to wind velocity in addition to wind direction is performed, and it is possible to perform optimization on the basis of an evaluation value with an even higher reliability.

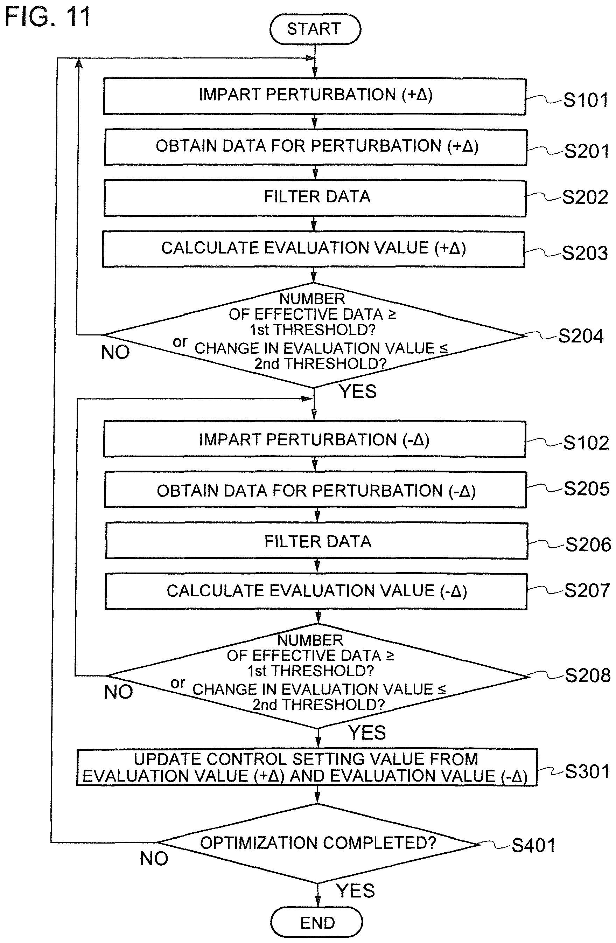

In the embodiment according to any of the above, for instance, the process shown in FIG. 11 may be performed. That is, in some embodiments, in the above method, in step S1 of imparting a perturbation, a perturbation of '+$\Delta$' may be imparted at each of different points of time (e.g. t1, t2) to the control setting of each of the wind turbines T to be optimized (S101). Specifically, the wind farm controller 10 executing the output optimization program 16 imparts a perturbation of '+$\Delta$' to each wind turbine T to be optimized. In this case, in step S2 of obtaining an evaluation value, data corresponding to the perturbation (+Δ) is obtained (step S201), the above filtering is performed on the basis of the obtained data (step S202), and an evaluation value (+Δ) is calculated on the basis of information from the wind turbine T passing through the filter to be used as effective data (step S203). Further, in step S2, it may be determined whether the number of effective data is not smaller than the first threshold, or a change in the evaluation value is not greater than the second threshold (step S204). The above first threshold and the second threshold may each be set to a desired value depending on the wind condition or the operational condition or the like of the wind farm 1. If the number of effective data is not smaller than the first threshold, or a change in the evaluation value is not greater than the second threshold (step S204; YES), the method proceeds to the process (step S102) of imparting a perturbation of '-Δ' at different points of time to the control setting of each of the wind turbines T to be optimized. Otherwise (step S204; NO), the method may return to step S101. After step S102, the wind farm controller 10 obtains data corresponding to the perturbation (-Δ) (step S205), performs the above filtering on the basis of the obtained data (step S206), and calculates an evaluation value (-Δ) on the basis of information from the wind turbine T passing through the filter to be used as effective data (step S207). Further, it is determined whether the number of effective data is not smaller than the first threshold, or a change in the evaluation value is not greater than the second threshold (step S208). If the number of effective data is not smaller than the first threshold, or a change in the evaluation value is not greater than the second threshold (step S208; YES), the control setting value is updated from the evaluation value (+Δ) and the evaluation value (-Δ) (step S301). Otherwise, the method returns to step S102. After step S301, it is determined whether optimization of the output is completed (step S401). If not completed (step S401; NO), the process returns to step S101, and if completed (step S401; YES), the process ends.

If at least a predetermined number (first threshold) of highly reliable evaluation values are obtained, or if a change in the evaluation values obtained at different points of time is not greater than a predetermined threshold (second threshold), convergence of optimization is further improved through update of the control setting based on the gradient of such evaluation values. As described above, according to the above method, it is possible to improve convergence before optimization of the total output of the entire wind farm 1 considerably.

In some embodiments, in any one of the above embodiments, in step S2 of obtaining an evaluation value, an average value of a plurality of (e.g. N) effective data may be obtained as an evaluation value (average processing).

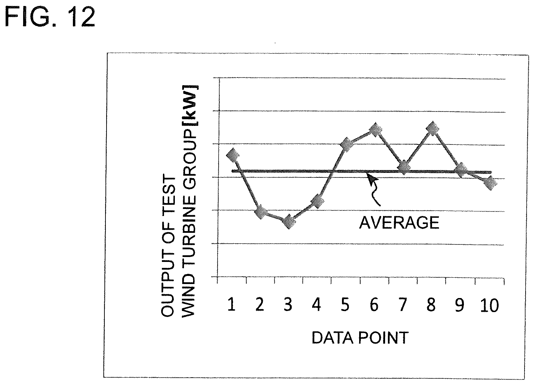

For instance, FIG. 12 shows an example where the number of effective data is ten, and an average of ten effective values obtained from ten wind turbines T is used as an evaluation value.

According to the above method using the averaging processing, it is possible to reduce the influence of variation in wind condition such as wind direction and wind velocity by using a plurality of effective data (smoothing), and thereby to optimize the total output of the wind farm 1 on the basis of a highly reliable evaluation value. As a result, it is possible to improve the convergence of optimization.

Furthermore, in the output optimization process using the above average process, as well as the following approximation process and the difference process, the output P is obtained by using the following expressions (7) and (8):

$$P = 1/2 \times C_p(\theta, \lambda) \times \rho \times A \times V^3 \cdots (7)$$

$$P = f(\theta, \lambda, V) \qquad \cdots (8)$$

Herein, P is power generation output, V is wind velocity, θ is pitch angle, λ is tip speed ratio, ρ is air density, A is swept area of a blade, where V is a turbulence, and θ and λ are controllable parameters.

Furthermore, in the output optimization process using the above average process, in step S1 of imparting a perturbation, for different points time (e.g. t1, t2) with different wind conditions, a perturbation of '+Δ' is imparted at t1, and a perturbation of '-Δ' is imparted at t2.

In some embodiments, in any one of the above embodiments, in step S2 of obtaining an evaluation value, an evaluation value may be obtained on the basis of an approximate curve model of a plurality of effective data (approximation process). The approximate curve model may be a cubic curve of output that is proportional to the cube of wind velocity.

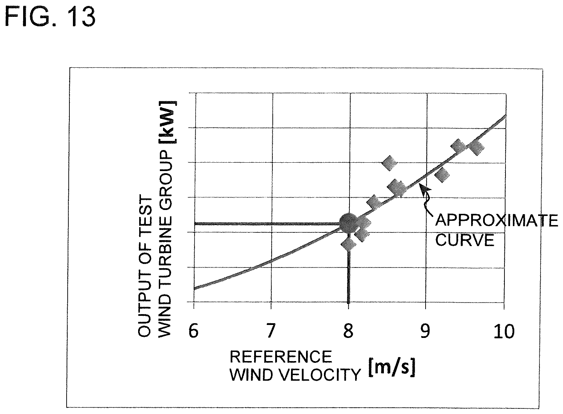

For instance, FIG. 13 shows an example where an evaluation value is obtained by using the approximate curve of evaluation values obtained from a plurality of wind turbines T and a reference wind velocity. Although not depicted, the above model may be a statistic model (identified from obtained data).

According to the above method using the approximation processing, it is possible to reduce the influence of variation in wind condition such as wind direction and wind velocity by using an approximate curve of a plurality of effective data, and thereby to optimize the total output of the wind farm 1 on the basis of a highly reliable evaluation value. As a result, it is possible to improve the convergence of optimization.

In some embodiments, in any one of the above embodiments, in step S2 of obtaining an evaluation value, one of a plurality of wind turbines T satisfying the first condition at least in relation to wind direction may be set as a reference wind turbine, and a difference between the output of the reference wind turbine and the output of each of the wind turbines T to be optimized may be obtained as an evaluation value (difference processing).

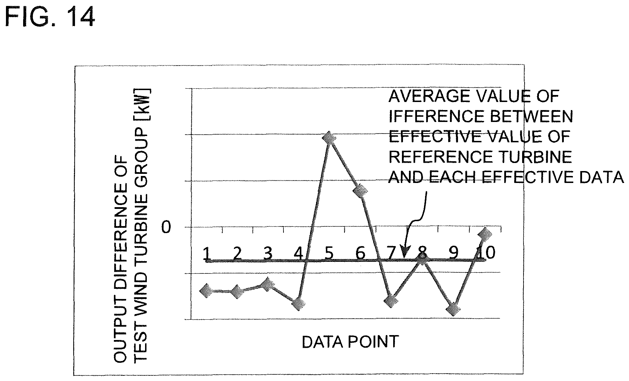

For instance, FIG. 14 shows an example where an evaluation value is obtained by using an average difference between the evaluation value of the reference wind turbine T and the evaluation values obtained from the plurality of wind turbines T.

According to the method using the above difference process, a difference of output (evaluation value) is obtained between one of the plurality of wind turbines T to be optimized satisfying the first condition in relation to at least wind direction being a reference wind turbine and other wind turbines T to be optimized. That is, by imparting a perturbation only to the wind turbines T to be optimized, and obtaining a difference between the reference wind turbine and other wind turbines T, the influence of wind condition is excluded, and it is possible to treat the difference as an evaluation value under the same wind condition. Thus, it is possible to evaluate a case where optimization control of the output is performed and a case not performed, under the same wind condition. Further, it is possible to optimize the total output of the entire wind farm 1 on the basis of a highly reliable evaluation value.

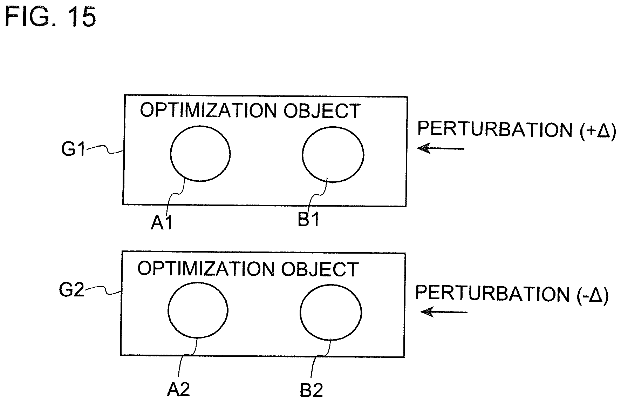

As shown in FIG. 15 as a non-limited example, in some embodiments, in the embodiment described in any one of the above, step S1 of imparting a perturbation may include simultaneously imparting a perturbation of '+Δ' to each wind turbine T of the first group G1 and a perturbation of '-Δ' to each wind direction T of the second group G2, for the plurality of wind turbines T satisfying the first condition at least in relation to the wind direction, where the first group G1 and the second group G2 each include a plurality of wind turbines T.

For instance, as the wind turbines T included in the wind farm 1, A1, A2, B1, B2 are arranged as shown in FIG. 15, where A1 and A2 are on the upwind side and B1 and B2 are on the downwind side. In this case, the wind turbines are sorted into the first group G1 of A1 and B1, and the second group G2 of A2 and B2. At this time, it is assumed that the optimum value for the control setting is the same for A1 and A2, and different perturbations are imparted simultaneously to the first group G1 and the second group G2. For instance, at the same point of time t1, perturbation of '+Δ' is imparted to the first group G1 and perturbation of '-Δ' is imparted to the second group G2, and an evaluation value of each group is obtained from the average output of the corresponding group. Accordingly, the command value for each wind turbine T (A1, A2, B1, B2) is updated on the basis of a difference in the evaluation values of the respective groups as described above.

According to the above method, different perturbations are imparted simultaneously to the first group G1 and the second group G2 of the plurality of wind turbines T satisfying the first condition at least in relation to wind direction, and thus it is possible to perform the optimization process and the same wind condition, which makes it possible to optimize the total output of the entire wind farm 1 on the basis of a highly reliable evaluation value.

As described above, the wind farm controller (control device of the wind farm) 10 according to at least one embodiment of the present disclosure is the wind farm controller 10 for a wind farm including a plurality of wind turbines T, and includes a perturbation imparting part for imparting a perturbation to the control setting of each of the wind turbines T to be optimized, an evaluation value calculation part for obtaining an evaluation value which includes at least the total output of the wind turbines T to be optimized, after imparting a perturbation, and an update part for updating the control setting for each of the wind turbines T to be optimized on the basis of the gradient of the evaluation value.

The evaluation value calculation part is configured to calculate, for each of the wind turbines T to be optimized, an evaluation value on the basis of effective data obtained from the wind turbine T satisfying the first condition which should be satisfied by the wind turbines T to be optimized at least in relation to wind direction.

With the above configuration, the control setting is updated by using effective data which is an evaluation value obtained from the wind turbine T satisfying the first condition which should be satisfied by the wind turbines T to be optimized at least in relation to wind direction. That is, for instance, filtering related to wind direction is performed, and it is possible to optimize the entire wind farm 1 on the basis of a highly reliable evaluation value obtained from the wind turbine T satisfying the first condition that wind direction is within a predetermined range, for instance. As a result, it is possible to improve the convergence of optimization.

The wind farm 1 according to at least one embodiment of the present disclosure includes a plurality of wind turbines T and the wind farm controller 10 according to some embodiments of the present disclosure configured to perform operation control of the plurality of wind turbines T.

With the above configuration, it is possible to obtain a wind farm 1 capable of performing filtering related to wind direction, and optimizing the total output of the entire wind farm 1 on the basis of a highly reliable evaluation value obtained from the wind turbine T satisfying the first condition that wind direction is within a predetermined range, for instance.

An operating control program for the wind farm 1 according to at least one embodiment of the present disclosure is an operation control program for the wind farm 1 including a plurality of wind turbines T, and is configured to make a computer perform a step of imparting a perturbation to the control setting of each of the wind turbines T to be optimized, a step of obtaining an evaluation value which includes at least the total output of the wind turbines T to be optimized,

and a step of updating the control setting for each of the wind turbines T to be optimized on the basis of the gradient of the evaluation value. Further, when the computer performs the step of obtaining an evaluation value, the computer obtains an evaluation value on the basis of effective data obtained only from the wind turbine T satisfying the first condition to be met by the wind turbines to be optimized at least in relation to wind direction, from among the wind turbines T to be optimized.

With the above configuration, it is possible to optimize the entire wind farm 1 on the basis of a highly reliable evaluation value obtained from the wind turbine T satisfying the first condition that wind direction is within a predetermined range, for instance.

According to the configuration or method of some embodiments described above, the above wind farm controller 10 is applied to the operation control of the plurality of wind turbines T, and thus it is possible to reach another optimum control setting in a short period of time even if an optimum control setting of each wind turbine T changes due to variation of wind. Furthermore, compared to a typical wind farm where the control setting is performed individually for each wind turbine, it is possible to improve the total power generation output of the entire wind farm 1 in a short period of time.

Embodiments of the present invention were described in detail above, but the present invention is not limited thereto, and various amendments and modifications may be implemented.

**Claims**

1. A method of operating a wind farm including a plurality of wind turbines (T), the method comprising:

   a step of imparting (S1) a perturbation to a control setting of each of the wind turbines (T) to be optimized;
   a step of, after imparting the perturbation, obtaining (S2, S2') an evaluation value including at least a total output of the wind turbines (T) to be optimized; and
   a step of updating (S3) the control setting for each of the wind turbines (T) to be optimized on the basis of a gradient of the evaluation value,
   wherein the step of obtaining (S2, S2') an evaluation value includes performing filtering of information obtained from each of the wind turbines (T) subjected to the perturbation, so as to acquire, as effective data, the evaluation value including the total output of the wind turbines (T) which satisfy a first condition which is required to be met by the wind turbines (T) to be optimized at least in relation to wind direction,
   wherein the step of imparting (S1) a perturbation includes imparting (S101) a perturbation of '+Δ' over different points of time to the control setting of each of the wind turbines (T) to be optimized,
   wherein the step of obtaining (S2, S2') the evaluation value includes determining (S204) whether the number of the effective data corresponding to the perturbation of '+Δ' is not smaller than a first threshold, or whether a change of the evaluation value corresponding to the perturbation of '+Δ' is not greater than a second threshold, and
   wherein, if the number of the effective data corresponding to the perturbation of '+Δ' is not smaller than the first threshold, or the change of the evaluation value corresponding to the perturbation of '+Δ' is not greater than the second threshold, the step of imparting (S102) the perturbation is performed such that a perturbation of '-Δ' is imparted to the control setting of each of the wind turbine (T) to be optimized over different points of time.

2. The method of operating a wind farm according to claim 1,
   wherein the step of obtaining (S2, S2') the evaluation value includes performing filtering of information obtained from each of the wind turbines (T) subjected to perturbation, so as to acquire, as the effective data, the evaluation value including the total output of the wind turbines (T) which satisfy the first condition in relation to the wind direction and a second condition which is required to be met by the wind turbines (T) to be optimized in relation to wind velocity.

3. The method of operating a wind farm according to any one of claims 1 and 2,
   wherein the step of obtaining (S2, S2') the evaluation value includes obtaining an average value of a plurality of the effective data to be used as the evaluation value.

4. The method of operating a wind farm according to any one of claims 1 to 3,
   wherein the step of obtaining (S2, S2') the evaluation value includes:

   obtaining an approximate curve model of a plurality of the effective data, the approximate curve model being a cubic curve of output that is proportional to a cube of wind velocity; and
   calculating the evaluation value by using the approximate curve model and a reference wind velocity.

5. The method of operating a wind farm according to any one of claims 1 to 4,
wherein the step of obtaining (S2, S2') the evaluation value includes setting one of the plurality of wind turbines (T) which satisfies the first condition at least in relation to wind direction as a reference wind turbine (T), and obtaining, as the evaluation value, a difference between an output of the reference wind turbine (T) and an output of each of the wind turbines (T) to be optimized.

6. The method of operating a wind farm according to any one of claims 1 to 5,
wherein, provided that the wind turbines (T) satisfying the first condition at least in relation to wind direction includes a first group and a second group each including the plurality of wind turbines (T), the step of imparting (S1) a perturbation includes simultaneously imparting a perturbation of '+Δ' to each wind turbine (T) of the first group and perturbation of '-Δ' to each wind turbine (T) of the second group.

7. A control device of a wind farm including a plurality of wind turbines (T), the control device comprising:

a perturbation imparting part (16) for imparting a perturbation to a control setting of each of the wind turbines (T) to be optimized;
an evaluation-value calculation part (16) for, after imparting the perturbation, obtaining an evaluation value including at least a total output of the wind turbines (T) to be optimized; and
an update part (16) for updating the control setting for each of the wind turbines (T) to be optimized on the basis of a gradient of the evaluation value,
wherein the evaluation-value calculation part (16) is configured to perform filtering of information obtained from each of the wind turbines (T) subject to the perturbation and to acquire, as effective data, the evaluation value including the total output of the wind turbines (T) which satisfy a first condition which is required to be met by the wind turbines (T) to be optimized at least in relation to wind direction,
wherein the perturbation imparting part (16) is configured to impart a perturbation of '+Δ' over different points of time to the control setting of each of the wind turbines (T) to be optimized,
wherein the evaluation-value calculation part (16) is configured to determine whether the number of the effective data corresponding to the perturbation of '+Δ' is not smaller than a first threshold, or whether a change of the evaluation value corresponding to the perturbation of '+Δ' is not greater than a second threshold, and
wherein the perturbation imparting part (16) is configured to, if the number of the effective data corresponding to the perturbation of '+Δ' is not smaller than the first threshold, or the change of the evaluation value corresponding to the perturbation of '+Δ' is not greater than the second threshold, impart a perturbation of '-Δ' to the control setting of each of the wind turbine (T) to be optimized over different points of time.

8. A wind farm, comprising:

a plurality of wind turbines (T); and
the control device according to claim 7, configured to perform an operation control of the plurality of wind turbines (T).

9. An operation control program of a wind farm including a plurality of wind turbines (T), configured to make a computer perform:

a step of imparting (S1) a perturbation to a control setting of each of the wind turbines (T) to be optimized;
a step of, after imparting the perturbation, obtaining (S2, S2') an evaluation value including at least a total output of the wind turbines (T) to be optimized; and
a step of updating (S3) the control setting for each of the wind turbines (T) to be optimized on the basis of a gradient of the evaluation value,
wherein, when the computer is caused to perform the step of obtaining (S2, S2') an evaluation value, the computer performs filtering of information obtained from each of the wind turbines (T) subject to the perturbation and acquires, as effective data, the evaluation value including the total output of the wind turbines (T) which satisfy a first condition which is required to be met by the wind turbines (T) to be optimized at least in relation to wind direction,
wherein the step of imparting (S1) a perturbation includes imparting (S101) a perturbation of '+Δ' over different points of time to the control setting of each of the wind turbines (T) to be optimized,
wherein the step of obtaining (S2, S2') the evaluation value includes determining (S204) whether the number of the effective data corresponding to the perturbation of '+Δ' is not smaller than a first threshold, or whether a change of the evaluation value corresponding to the perturbation of '+Δ' is not greater than a second threshold, and

wherein, in the step of imparting the perturbation, if the number of the effective data corresponding to the perturbation of '+Δ' is not smaller than the first threshold, or the change of the evaluation value corresponding to the perturbation of '+Δ' is not greater than the second threshold, the step of imparting (S102) the perturbation is performed such that a perturbation of '-Δ' is imparted to the control setting of each of the wind turbine (T) to be optimized over different points of time.

**Patentansprüche**

1.  Ein Verfahren zum Betreiben eines Windparks, der eine Vielzahl von Windturbinen (T) umfasst, wobei das Verfahren aufweist:

    einen Schritt zum Übertragen (S1) einer Störung auf eine Steuereinstellung von jeder der zu optimierenden Windturbinen (T) ;
    einen Schritt zum Erhalten (S2, S2') eines Bewertungswertes, der zumindest eine Gesamtleistung der zu optimierenden Windturbinen (T) umfasst, nachdem die Störung übertragen wurde; und
    einen Schritt zum Aktualisieren (S3) der Steuereinstellung für jede der zu optimierenden Windturbinen (T) auf der Grundlage eines Gradienten des Bewertungswertes,
    wobei der Schritt zum Erhalten (S2, S2') eines Bewertungswertes ein Durchführen einer Filterung von Informationen umfasst, die von jeder der Windturbinen (T) erhalten werden, die der Störung ausgesetzt sind, um so als effektive Daten den Bewertungswert einschließlich der Gesamtleistung der Windturbinen (T) zu akquirieren, die eine erste Bedingung erfüllen, die von den Windturbinen (T) erfüllt werden muss, um zumindest in Bezug auf eine Windrichtung optimiert zu werden,
    wobei der Schritt zum Übertragen (S1) einer Störung ein Übertragen (S101) einer Störung von '+Δ' über verschiedene Zeitpunkte auf die Steuereinstellung von jeder der zu optimierenden Windturbinen (T) umfasst,
    wobei der Schritt zum Erhalten (S2, S2') des Bewertungswertes ein Bestimmen (S204) umfasst, ob die Anzahl der effektiven Daten, die zu der Störung von '+Δ' korrespondieren, nicht kleiner als ein erster Schwellenwert ist, oder ob eine Änderung des Bewertungswertes, der zu der Störung von '+Δ' korrespondiert, nicht größer als ein zweiter Schwellenwert ist, und
    wobei, falls die Anzahl der effektiven Daten, die zu der Störung von '+Δ' korrespondieren, nicht kleiner als der erste Schwellenwert ist, oder die Änderung des Bewertungswertes, der zu der Störung von '+Δ' korrespondiert, nicht größer als der zweite Schwellenwert ist, der Schritt zum Übertragen (S102) der Störung so durchgeführt wird, dass eine Störung von '-Δ' auf die Steuereinstellung von jeder der zu optimierenden Windturbinen (T) über verschiedene Zeitpunkte übertragen wird.

2.  Das Verfahren zum Betreiben eines Windparks nach Anspruch 1,
    wobei der Schritt zum Erhalten (S2, S2') des Bewertungswertes ein Durchführen einer Filterung von Informationen umfasst, die von jeder der Windturbinen (T) erhalten werden, die einer Störung ausgesetzt sind, um so als die effektiven Daten den Bewertungswert einschließlich der Gesamtleistung der Windturbinen (T) zu akquirieren, die die erste Bedingung in Bezug auf die Windrichtung und eine zweite Bedingung erfüllen, die von den Windturbinen (T), die in Bezug auf eine Windgeschwindigkeit optimiert werden sollen, erfüllt werden muss.

3.  Das Verfahren zum Betreiben eines Windparks nach einem der Ansprüche 1 und 2,
    wobei der Schritt zum Erhalten (S2, S2') des Bewertungswertes ein Erhalten eines Durchschnittswertes einer Vielzahl der effektiven Daten, die als Bewertungswert verwendet werden sollen, umfasst.

4.  Das Verfahren zum Betreiben eines Windparks nach einem der Ansprüche 1 bis 3,
    wobei der Schritt zum Erhalten (S2, S2') des Bewertungswertes umfasst:

    Erhalten eines angenäherten Kurvenmodells einer Vielzahl der effektiven Daten, wobei das angenäherte Kurvenmodell eine kubische Kurve einer Ausgabe ist, die proportional zu einem Kubus einer Windgeschwindigkeit ist; und
    Berechnen des Bewertungswertes unter Verwendung des angenäherten Kurvenmodells und einer Bezugswindgeschwindigkeit.

5.  Das Verfahren zum Betreiben eines Windparks nach einem der Ansprüche 1 bis 4,
    wobei der Schritt zum Erhalten (S2, S2') des Bewertungswertes ein Einstellen einer der Vielzahl von Windturbinen (T), die die erste Bedingung zumindest in Bezug auf eine Windrichtung erfüllt, als eine Bezugswindturbine (T), und ein Erhalten einer Differenz zwischen einer Ausgabe der Bezugswindturbine (T) und einer Ausgabe von jeder der zu optimierenden Windturbinen (T) als den Bewertungswert umfasst.

6. Das Verfahren zum Betreiben eines Windparks nach einem der Ansprüche 1 bis 5,
wobei, vorausgesetzt, dass die Windturbinen (T), die die erste Bedingung zumindest in Bezug auf eine Windrichtung erfüllen, eine erste Gruppe und eine zweite Gruppe umfassen, die jeweils die Vielzahl von Windturbinen (T) umfassen, der Schritt zum Übertragen (S1) einer Störung ein gleichzeitiges Übertragen einer Störung von "+Δ" auf jede Windturbine (T) der ersten Gruppe und einer Störung von "-Δ" auf jede Windturbine (T) der zweiten Gruppe umfasst.

7. Eine Steuervorrichtung eines Windparks mit einer Vielzahl von Windturbinen (T), wobei die Steuervorrichtung aufweist:

einen Störungsübertragungsteil (16) zum Übertragen einer Störung auf eine Steuereinstellung von jeder der zu optimierenden Windturbinen (T);
einen Bewertungswert-Berechnungsteil (16) zum Erhalten eines Bewertungswertes, der zumindest eine Gesamtleistung der zu optimierenden Windturbinen (T) umfasst, nachdem die Störung übertragen wurde; und
einen Aktualisierungsteil (16) zum Aktualisieren der Steuereinstellung für jede der zu optimierenden Windturbinen (T) auf der Grundlage eines Gradienten des Bewertungswertes,
wobei der Bewertungswert-Berechnungsteil (16) konfiguriert ist, um eine Filterung von Informationen durchzuführen, die von jeder der Windturbinen (T), die der Störung ausgesetzt sind, erhalten werden, und um als effektive Daten den Bewertungswert einschließlich der Gesamtleistung der Windturbinen (T) zu akquirieren, die eine erste Bedingung erfüllen, die von den Windturbinen (T) erfüllt werden muss, um zumindest in Bezug auf eine Windrichtung optimiert zu werden,
wobei der störungsübertragende Teil (16) konfiguriert ist, um der Steuereinstellung von jeder der zu optimierenden Windturbinen (T) über verschiedene Zeitpunkte eine Störung von '+Δ' zu übertragen,
wobei der Bewertungswert-Berechnungsteil (16) konfiguriert ist, um zu bestimmen, ob die Anzahl der effektiven Daten, die zu der Störung von '+Δ' korrespondieren, nicht kleiner als ein erster Schwellenwert ist, oder ob eine Änderung des Bewertungswertes, der zu der Störung von '+Δ' korrespondiert, nicht größer als ein zweiter Schwellenwert ist, und
wobei der störungsübertragende Teil (16) konfiguriert ist, um, falls die Anzahl der effektiven Daten, die zu der Störung von '+Δ' korrespondieren, nicht kleiner als der erste Schwellenwert ist, oder die Änderung des Bewertungswertes, der zu der Störung von '+Δ' korrespondiert, nicht größer als der zweite Schwellenwert ist, eine Störung von '-Δ' an die Steuereinstellung von jeder der Windturbinen (T), die über verschiedene Zeitpunkte optimiert werden soll, zu übertragen.

8. Ein Windpark, aufweisend:

eine Vielzahl von Windturbinen (T); und
die Steuervorrichtung nach Anspruch 7, die konfiguriert ist, um eine Betriebssteuerung der Vielzahl von Windturbinen (T) durchzuführen.

9. Ein Betriebssteuerprogramm eines Windparks mit einer Vielzahl von Windturbinen (T), das konfiguriert ist, um einen Computer Folgendes durchführen zu lassen:

einen Schritt zum Übertragen (S1) einer Störung auf eine Steuereinstellung von jeder der zu optimierenden Windturbinen (T) ;
einen Schritt zum Erhalten (S2, S2') eines Bewertungswertes, der zumindest eine Gesamtleistung der zu optimierenden Windturbinen (T) umfasst, nachdem die Störung übertragen wurde; und
einen Schritt zum Aktualisieren (S3) der Steuereinstellung für jede der zu optimierenden Windturbinen (T) auf der Grundlage eines Gradienten des Bewertungswertes,
wobei, wenn der Computer veranlasst wird, den Schritt zum Erhalten (S2, S2') eines Bewertungswertes durchzuführen, der Computer eine Filterung von Informationen durchführt, die von jeder der Windturbinen (T), die der Störung ausgesetzt sind, erhalten werden, und als effektive Daten den Bewertungswert einschließlich der Gesamtleistung der Windturbinen (T) akquiriert, die eine erste Bedingung erfüllen, die von den Windturbinen (T) erfüllt werden muss, um zumindest in Bezug auf eine Windrichtung optimiert zu werden,
wobei der Schritt zum Übertragen (S1) einer Störung ein Übertragen (S101) einer Störung von '+Δ' über verschiedene Zeitpunkte auf die Steuereinstellung von jeder der zu optimierenden Windturbinen (T) umfasst,

wobei der Schritt zum Erhalten (S2, S2') des Bewertungswertes ein Bestimmen (S204) umfasst, ob die Anzahl der effektiven Daten, die zu der Störung von '+Δ' korrespondieren, nicht kleiner als ein erster Schwellenwert ist, oder ob eine Änderung des Bewertungswertes, der zu der Störung von '+Δ' korrespondiert, nicht größer als ein zweiter Schwellenwert ist, und

wobei in dem Schritt zum Übertragen der Störung, falls die Anzahl der effektiven Daten, die zu der Störung von '+Δ' korrespondieren, nicht kleiner als der erste Schwellenwert ist, oder die Änderung des Bewertungswertes, der zu der Störung von '+Δ' korrespondiert, nicht größer als der zweite Schwellenwert ist, der Schritt zum Übertragen (S102) der Störung so durchgeführt wird, dass eine Störung von '-Δ' der Steuereinstellung von jeder der zu optimierenden Windturbinen (T) über verschiedene Zeitpunkte übertragen wird.

## Revendications

1. Procédé de fonctionnement d'un parc d'éoliennes comprenant une pluralité de turbines éoliennes (T), le procédé comprenant :

    une étape consistant à transmettre (S1) une perturbation à un réglage de commande de chacune des turbines éoliennes (T) devant être optimisées ;
    une étape consistant à, après avoir transmis la perturbation, obtenir (S2, S2') une valeur d'évaluation comprenant au moins un rendement total des turbines éoliennes (T) devant être optimisées ; et
    une étape consistant à mettre à jour (S3) le réglage de commande pour chacune des turbines éoliennes (T) devant être optimisées sur la base d'un gradient de la valeur d'évaluation,
    dans lequel l'étape consistant à obtenir (S2, S2') une valeur d'évaluation comprend la mise en œuvre d'un filtrage d'informations obtenues à partir de chacune des turbines éoliennes (T) soumises à la perturbation, de façon à acquérir, comme données effectives, la valeur d'évaluation comprenant le rendement total des turbines éoliennes (T) qui satisfont à une première condition qui doit être remplie par les turbines éoliennes (T) devant être optimisées au moins par rapport à une direction de vent,
    dans lequel l'étape consistant à transmettre (S1) une perturbation comprend la transmission (S101) d'une perturbation de « +Δ » sur différents points temporels au réglage de commande de chacune des turbines éoliennes (T) devant être optimisées,
    dans lequel l'étape consistant à obtenir (52, S2') la valeur d'évaluation comprend le fait de déterminer (S204) si le nombre des données effectives correspondant à la perturbation de « +Δ » n'est pas plus petit qu'un premier seuil, ou si un changement de la valeur d'évaluation correspondant à la perturbation de « +Δ » n'est pas plus grand qu'un deuxième seuil, et
    dans lequel, si le nombre des données effectives correspondant à la perturbation de « +Δ » n'est pas plus petit que le premier seuil, ou le changement de la valeur d'évaluation correspondant à la perturbation de « +Δ » n'est pas plus grand que le deuxième seuil, l'étape consistant à transmettre (S102) la perturbation est mise en œuvre de telle sorte qu'une perturbation de « -Δ » soit transmise au réglage de commande de chacune de la turbine éolienne (T) devant être optimisée sur différents points temporels.

2. Procédé de fonctionnement d'un parc d'éoliennes selon la revendication 1,
    dans lequel l'étape consistant à obtenir (S2, S2') la valeur d'évaluation comprend la mise en œuvre d'un filtrage d'informations obtenues à partir de chacune des turbines éoliennes (T) soumises à une perturbation, de façon à acquérir, comme les données effectives, la valeur d'évaluation comprenant le rendement total des turbines éoliennes (T) qui satisfont à la première condition par rapport à la direction de vent et une deuxième condition qui doit être remplie par les turbines éoliennes (T) devant être optimisées par rapport à une vitesse de vent.

3. Procédé de fonctionnement d'un parc d'éoliennes selon l'une quelconque des revendications 1 et 2,
    dans lequel l'étape consistant à obtenir (S2, S2') la valeur d'évaluation comprend l'obtention d'une valeur moyenne d'une pluralité des données effectives devant être utilisée comme la valeur d'évaluation.

4. Procédé de fonctionnement d'un parc d'éoliennes selon l'une quelconque des revendications 1 à 3,
    dans lequel l'étape consistant à obtenir (S2, S2') la valeur d'évaluation comprend :

    l'obtention d'un modèle de courbe approximative d'une pluralité des données effectives, le modèle de courbe approximative étant une courbe de rendement cubique qui est proportionnelle à un cube d'une vitesse de vent ; et
    le calcul de la valeur d'évaluation à l'aide du modèle de courbe approximative et d'une vitesse de vent de référence.

**5.** Procédé de fonctionnement d'un parc d'éoliennes selon l'une quelconque des revendications 1 à 4, dans lequel l'étape consistant à obtenir (S2, S2') la valeur d'évaluation comprend le réglage d'une de la pluralité de turbines éoliennes (T) qui satisfait à la première condition au moins par rapport à une direction de vent comme une turbine éolienne (T) de référence, et l'obtention, comme la valeur d'évaluation, d'une différence entre un rendement de la turbine éolienne (T) de référence et un rendement de chacune des turbines éoliennes (T) devant être optimisées.

**6.** Procédé de fonctionnement d'un parc d'éoliennes selon l'une quelconque des revendications 1 à 5, dans lequel, à condition que les turbines éoliennes (T) satisfaisant à la première condition au moins par rapport à une direction de vent comprennent un premier groupe et un deuxième groupe comprenant chacun la pluralité de turbines éoliennes (T), l'étape consistant à transmettre (S1) une perturbation comprend la transmission simultanée d'une perturbation de « +Δ » à chaque turbine éolienne (T) du premier groupe et d'une perturbation de « -Δ » à chaque turbine éolienne (T) du deuxième groupe.

**7.** Dispositif de commande d'un parc d'éoliennes comprenant une pluralité de turbines éoliennes (T), le dispositif de commande comprenant :

une partie de transmission de perturbation (16) pour transmettre une perturbation à un réglage de commande de chacune des turbines éoliennes (T) devant être optimisées ;
une partie de calcul de valeur d'évaluation (16) pour, après avoir transmis la perturbation, obtenir une valeur d'évaluation comprenant au moins un rendement total des turbines éoliennes (T) devant être optimisées ; et
une partie de mise à jour (16) pour mettre à jour le réglage de commande pour chacune des turbines éoliennes (T) devant être optimisées sur la base d'un gradient de la valeur d'évaluation,
dans lequel la partie de calcul de valeur d'évaluation (16) est configurée pour mettre en œuvre un filtrage d'informations obtenues à partir de chacune des turbines éoliennes (T) soumises à la perturbation et pour acquérir, comme données effectives, la valeur d'évaluation comprenant le rendement total des turbines éoliennes (T) qui satisfont à une première condition qui doit être remplie par les turbines éoliennes (T) devant être optimisées au moins par rapport à une direction de vent,
dans lequel la partie de transmission de perturbation (16) est configurée pour transmettre une perturbation de « +Δ » sur différents points temporels au réglage de commande de chacune des turbines éoliennes (T) devant être optimisées,
dans lequel la partie de calcul de valeur d'évaluation (16) est configurée pour déterminer si le nombre des données effectives correspondant à la perturbation de « +Δ » n'est pas plus petit qu'un premier seuil, ou si un changement de la valeur d'évaluation correspondant à la perturbation de « +Δ » n'est pas plus grand qu'un deuxième seuil, et
dans lequel la partie de transmission de perturbation (16) est configurée pour, si le nombre des données effectives correspondant à la perturbation de « +Δ » n'est pas plus petit que le premier seuil, ou le changement de la valeur d'évaluation correspondant à la perturbation de « +Δ » n'est pas plus grand que le deuxième seuil, transmettre une perturbation de « -Δ » au réglage de commande de chacune de la turbine éolienne (T) devant être optimisée sur différents points temporels.

**8.** Parc d'éoliennes, comprenant :

une pluralité de turbines éoliennes (T) ; et
le dispositif de commande selon la revendication 7, configuré pour mettre en œuvre une commande de fonctionnement de la pluralité de turbines éoliennes (T).

**9.** Programme de commande de fonctionnement d'un parc d'éoliennes comprenant une pluralité de turbines éoliennes (T), configuré pour amener un ordinateur à mettre en œuvre :

une étape consistant à transmettre (S1) une perturbation à un réglage de commande de chacune des turbines éoliennes (T) devant être optimisées ;
une étape consistant à, après avoir transmis la perturbation, obtenir (S2, S2') une valeur d'évaluation comprenant au moins un rendement total des turbines éoliennes (T) devant être optimisées ; et
une étape consistant à mettre à jour (S3) le réglage de commande pour chacune des turbines éoliennes (T) devant être optimisées sur la base d'un gradient de la valeur d'évaluation,
dans lequel, lorsque l'ordinateur est amené à mettre en œuvre l'étape consistant à obtenir (S2, S2') une valeur d'évaluation, l'ordinateur met en œuvre un filtrage d'informations obtenues à partir de chacune des turbines éoliennes (T) soumises à la perturbation et acquiert, comme données effectives, la valeur d'évaluation comprenant le rendement total des turbines éoliennes (T) qui satisfont à une première condition qui doit être remplie par les turbines éoliennes (T) devant être optimisées au moins par rapport à une direction de vent,

dans lequel l'étape consistant à transmettre (S1) une perturbation comprend la transmission (S101) d'une perturbation de « +Δ » sur différents points temporels au réglage de commande de chacune des turbines éoliennes (T) devant être optimisées,

dans lequel l'étape consistant à obtenir (S2, S2') la valeur d'évaluation comprend le fait de déterminer (S204) si le nombre des données effectives correspondant à la perturbation de « +Δ » n'est pas plus petit qu'un premier seuil, ou si un changement de la valeur d'évaluation correspondant à la perturbation de « +Δ » n'est pas plus grand qu'un deuxième seuil, et

dans lequel, dans l'étape consistant à transmettre la perturbation, si le nombre des données effectives correspondant à la perturbation de « +Δ » n'est pas plus petit que le premier seuil, ou le changement de la valeur d'évaluation correspondant à la perturbation de « +Δ » n'est pas plus grand que le deuxième seuil, l'étape consistant à transmettre (S102) la perturbation est mise en œuvre de telle sorte qu'une perturbation de « -Δ » soit transmise au réglage de commande de chacune de la turbine éolienne (T) devant être optimisée sur différents points temporels.

FIG. 1

FIG. 2

# FIG. 3

FIG. 4A

FIG. 4B

FIG. 5

FIRST
ITERATION

Reference +

40    41    42

43

SECOND
ITERATION

Reference +

40    41    42

$\hat{\theta}_{\kappa+1}$

FINAL
ITERATION

Reference +

40    41    42

EP 3 536 949 B1

# FIG. 6

EP 3 536 949 B1

CONTROL SETTING :
$$\left\{ \hat{\theta}_\kappa - (c_{\kappa 1}\, \Delta_{\kappa 1} + c_{\kappa 2}\, \Delta_{\kappa 2}),\; \hat{\theta}_\kappa + (c_{\kappa 1}\, \Delta_{\kappa 1} + c_{\kappa 2}\, \Delta_{\kappa 2}) \right\} \qquad \cdots \; (2)$$

EVALUATION VALUE :
$$\left\{ L\big(\hat{\theta}_\kappa - (c_{\kappa 1}\, \Delta_{\kappa 1} + c_{\kappa 2}\, \Delta_{\kappa 2})\big),\; L\big(\hat{\theta}_\kappa - (c_{\kappa 1}\, \Delta_{\kappa 1} + c_{\kappa 2}\, \Delta_{\kappa 2})\big) \right\} \qquad \cdots \; (3)$$

UPDATE ALGORITHM
FOR CONTROL SETTING :

$$\hat{\theta}_{\kappa+1} = \hat{\theta}_\kappa - a_{\kappa 1}\hat{g}_{\kappa 1}(\hat{\theta}_\kappa) - a_{\kappa 2}\hat{g}_{\kappa 2}(\hat{\theta}_\kappa) \qquad \cdots \; (4)$$

$$\hat{g}_{\kappa 1}(\hat{\theta}_\kappa) = \frac{L\big(\hat{\theta}_\kappa + (c_{\kappa 1}\, \Delta_{\kappa 1} + c_{\kappa 2}\, \Delta_{\kappa 2})\big) - L\big(\hat{\theta}_\kappa - (c_{\kappa 1}\, \Delta_{\kappa 1} + c_{\kappa 2}\, \Delta_{\kappa 2})\big)}{2(c_{\kappa 1} + c_{\kappa 2})} \begin{bmatrix} \Delta_{\kappa 11}^{-1} \\ \Delta_{\kappa 12}^{-1} \\ \vdots \\ \Delta_{\kappa 1p}^{-1} \end{bmatrix} \qquad \cdots \; (5)$$

$$\hat{g}_{\kappa 2}(\hat{\theta}_\kappa) = \frac{L\big(\hat{\theta}_\kappa + (c_{\kappa 1}\, \Delta_{\kappa 1} + c_{\kappa 2}\, \Delta_{\kappa 2})\big) - L\big(\hat{\theta}_\kappa - (c_{\kappa 1}\, \Delta_{\kappa 1} + c_{\kappa 2}\, \Delta_{\kappa 2})\big)}{2(c_{\kappa 1} + c_{\kappa 2})} \begin{bmatrix} \Delta_{\kappa 21}^{-1} \\ \Delta_{\kappa 22}^{-1} \\ \vdots \\ \Delta_{\kappa 2p}^{-1} \end{bmatrix} \qquad \cdots \; (6)$$

# FIG. 7

TOTAL POWER GENERATION OUTPUT
[kw]
MR-SPSA METHOD
PRESENT
DISCLOSURE

FS RESEARCH METHOD

| HIGH RESOLUTION | PRESENT IDEA |
| LOW RESOLUTION | |

| LOW RES. | HIGH RESOLUTION | MR-SPSA METHOD |

| HIGH RESOLUTION | SPSA METHOD |

TIME

FIG. 8

```
                    ┌─────────────┐
                    │    START    │
                    └──────┬──────┘
                           │
                           ▼
  ┌────────────────────────────────────────────────┐
  │  IMPART PERTURBATION TO EACH CONTROL SETTING    │
  │    OF EACH WIND TURBINE TO BE OPTIMIZED         │──S1
  └────────────────────┬───────────────────────────┘
                       │
                       ▼
  ┌────────────────────────────────────────────────┐
  │   OBTAIN EVALUATION VALUE INCLUDING AT LEAST    │
  │  TOTAL OUTPUT OF WIND TURBINE TO BE OPTIMIZED   │
  │                                                 │
  │       EMPLOY EFFECTIVE VALUE OBTAINED           │──S2
  │ FROM WIND TURBINE SATISFYING FIRST CONDITION    │
  │  RELATED TO WIND DIRECTION AS EFFECTIVE DATA    │
  └────────────────────┬───────────────────────────┘
                       │
                       ▼
  ┌────────────────────────────────────────────────┐
  │ UPDATE CONTROL SETTING FOR EACH WIND TURBINE    │
  │              TO BE OPTIMIZED                    │──S3
  │   BASED ON GRADIENT OF EVALUATION VALUE         │
  └────────────────────┬───────────────────────────┘
                       │
                       ▼
                ┌─────────────┐
                │     END     │
                └─────────────┘
```

FIG. 9A

WIND DIRECTION: NORTH

FIG. 9B

WIND VELOCITY:
MID WIND VELOCITY
WIND DIRECTION:
NORTH-EAST

LOW WIND VELOCITY

MID WIND VELOCITY

HIGH WIND VELOCITY

# FIG. 10

START

IMPART PERTURBATION TO CONTROL SETTING OF
EACH WIND TURBINE TO BE OPTIMIZED — S1

OBTAIN EVALUATION VALUE INCLUDING AT LEAST
TOTAL OUTPUT OF WIND TURBINE TO BE OPTIMIZED

EMPLOY EVALUATION VALUE OBTAINED FROM WIND
TURBINE SATISFYING FIRST CONDITION RELATED TO
WIND DIRECTION AND SECOND CONDITION RELATED
TO WIND SEED AS EFFECTIVE DATA — S2'

UPDATE CONTROL SETTING OF
EACH WIND TURBINE TO BE OPTIMIZED
BASED ON GRADIENT OF EVALUATION VALUE — S3

END

FIG. 11

```
            ┌─────────┐
            │  START  │
            └────┬────┘
                 ↓
┌────────────────────────────────────────┐
│        IMPART PERTURBATION (+Δ)         │──S101
└────────────────────┬───────────────────┘
                     ↓
┌────────────────────────────────────────┐
│    OBTAIN DATA FOR PERTURBATION (+Δ)    │──S201
└────────────────────┬───────────────────┘
                     ↓
┌────────────────────────────────────────┐
│               FILTER DATA               │──S202
└────────────────────┬───────────────────┘
                     ↓
┌────────────────────────────────────────┐
│       CALCULATE EVALUATION VALUE (+Δ)   │──S203
└────────────────────┬───────────────────┘
```

NUMBER OF EFFECTIVE DATA ≥ 1st THRESHOLD?
or CHANGE IN EVALUATION VALUE ≤ 2nd THRESHOLD? ──S204

NO

YES

```
┌────────────────────────────────────────┐
│        IMPART PERTURBATION (-Δ)         │──S102
└────────────────────┬───────────────────┘
                     ↓
┌────────────────────────────────────────┐
│    OBTAIN DATA FOR PERTURBATION (-Δ)    │──S205
└────────────────────┬───────────────────┘
                     ↓
┌────────────────────────────────────────┐
│               FILTER DATA               │──S206
└────────────────────┬───────────────────┘
                     ↓
┌────────────────────────────────────────┐
│       CALCULATE EVALUATION VALUE (-Δ)   │──S207
└────────────────────┬───────────────────┘
```

NUMBER OF EFFECTIVE DATA ≥ 1st THRESHOLD?
or CHANGE IN EVALUATION VALUE ≤ 2nd THRESHOLD? ──S208

NO

YES

```
┌────────────────────────────────────────┐
│ UPDATE CONTROL SETTING VALUE FROM       │──S301
│ EVALUATION VALUE (+Δ) AND EVALUATION    │
│ VALUE (-Δ)                              │
└────────────────────┬───────────────────┘
```

OPTIMIZATION COMPLETED? ──S401

NO

YES

```
            ┌─────────┐
            │   END   │
            └─────────┘
```

FIG. 12

## FIG. 13

# FIG. 14

# FIG. 15

G1 — OPTIMIZATION OBJECT

PERTURBATION (+Δ)

A1        B1

G2 — OPTIMIZATION OBJECT

PERTURBATION (-Δ)

A2        B2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2679813 A

**Non-patent literature cited in the description**

- Wind farm multi-objective wake redirection for optimizing power production and loads. **VAN DIJK MIKE T et al.** ENERGY. ELSEVIER, 11 January 2017, vol. 121, 561-569